# EUROPEAN PATENT APPLICATION

(11) **EP 3 505 971 A1**
(43) Date of publication of application: **03.07.2019**
(21) Application number: 18214754.6
(22) Date of filing: 20.12.2018
(51) Int. Cl.: G01T 7/00

(54) **SCINTILLATOR SENSITIVITY MEASURING DEVICE AND MEASURING METHOD**

(30) Priority: 26.12.2017 CN 201711428925
(71) Applicant: Nuctech Company Limited, Beijing 100084 (CN)
(72) Inventor: ZHAO, Bozhen, BEIJING, 100084 (CN); LI, Shuwei, BEIJING, 100084 (CN); ZOU, Xiang, BEIJING, 100084 (CN); WANG, Yi, BEIJING, 100084 (CN); ZHAO, Ziran, BEIJING, 100084 (CN); ZHU, Weibin, BEIJING, 100084 (CN); SUN, Lifeng, BEIJING, 100084 (CN); ZHANG, Qingjun, Beijing 100084, Chinzhang, Qingjun (CH)
(74) Representative: Held, Stephan

(57) **Abstract**

The present disclosure relates to a scintillator sensitivity measuring device and a measuring method. The scintillator sensitivity measuring device includes: a ray source (11) for emitting rays (13) to a radiation area (15); a driving mechanism (2) for causing multiple sets of scintillators (3) to be detected to successively enter the radiation area (15), and an image acquiring system (4) for acquiring scintillation illuminating images of the detected scintillators (3) which enter the radiation area (15), so that the sensitivity of the detected scintillators (3) is calculated on the basis of the scintillation illuminating images. The embodiments of the present disclosure are capable of quickly and efficiently implementing sensitivity measurement of a plurality of scintillators.

## Description

### TECHNICAL FIELD

The present disclosure relates to the field of radiation detection, and in particular to a scintillator sensitivity measuring device and a measuring method.

### BACKGROUND

A scintillator is such a material that when high-energy particles (such as X/γ rays, charged particles, neutrons, etc.) are incident in the scintillator, part of energy is absorbed by the scintillator and converted into low-energy scintillation light (the scintillation light band is distributed from UV to IR). According to this characteristic, a scintillator is often used in a nuclear detector to absorb ray energy as a radiation sensitive medium, and the generated scintillation light is absorbed by a photosensitive device and converted into an electrical signal. Such a detector is generally called a scintillator detector. Common scintillators include NaI, CsI, BGO, CWO, PWO, and the like. Since the emission direction of scintillation light is isotropic, the surface of a scintillator, except the portion coupled to a photosensitive device, is generally encapsulated by a reflective layer to reduce the loss and crosstalk of the scintillation light.

In radiation imaging applications (such as container/vehicle scanning, industrial CT, medical CT, etc.), a radiation imaging system often requires a detector system (similar to an image sensor of a camera) consisting of hundreds to millions of detection units in order to achieve adequate imaging resolution and scanning speed; each detection unit consists of a scintillator and a photosensitive device, and the volume of a detection unit ranges from less than 1 millimeter to tens of millimeters. In order to facilitate production, a plurality of scintillators are usually fixed to form linear or planar scintillator arrays, each scintillator is a pixel, and pixels are separated by a reflective layer.

Sensitivity is one of main performance indicators of a scintillator. Under the same radiation conditions, the higher the sensitivity, the more photons are output by the scintillator. In a typical related measurement technique, a scintillator is irradiated through a ray source (mainly classified into an isotope source and an X-ray source), and the intensity of a scintillation light signal is read out through a photomultiplier tube to measure the sensitivity of the scintillator.

### SUMMARY

The inventors have found through research that the related measurement technique involved in the background art can only measure one scintillator at one time and requires manual operation, so there is a problem of low measurement efficiency. In addition, because a photomultiplier tube does not have position resolution ability, it cannot measure the sensitivity of each pixel in scintillators with complex structure (such as linear array, planar array or other multi-pixel structure).

In view of this, the embodiments of the present disclosure provide a scintillator sensitivity measuring device and a measuring method, which are capable of quickly and efficiently implementing sensitivity measurement of multiple sets of scintillators.

According to an aspect of the present disclosure, provided is a scintillator sensitivity measuring device, including:
a ray source for emitting rays towards a radiation area;
a driving mechanism for causing multiple sets of scintillators to be detected to successively enter the radiation area, and
an image acquiring system for acquiring scintillation illuminating images of the detected scintillators which enter the radiation area, so that the sensitivity of the detected scintillators is calculated on the basis of the scintillation illuminating images.

In some embodiments, the driving mechanism is operatively connected to the ray source so as to drive the ray source to move relative to the multiple sets of scintillators.

In some embodiments, the driving mechanism is operatively connected to the multiple sets of scintillators and drives the multiple sets of scintillators to move relative to the ray source.

In some embodiments, the scintillator sensitivity measuring device further includes a scintillator holder, wherein the multiple sets of scintillators are disposed on the scintillator holder, and the driving mechanism is configured to drive the scintillator holder to move so as to implement movement of the multiple sets of scintillators relative to the ray source.

In some embodiments, the scintillator holder includes a tray, and the multiple sets of scintillators are arranged on a surface of the tray.

In some embodiments, the tray is movable in a horizontal direction under the driving of the driving mechanism.

In some embodiments, the ray source is located on one side of the tray (21) adjacent to the multiple sets of scintillators, and a contact portion of the tray with the multiple sets of scintillators includes an optical transparent sheet.

In some embodiments, the sheet includes an optical fiber panel, a glass panel or quartz panel with a frosted surface on the side close to the multiple sets of scintillators and a smooth surface on the other side.

In some embodiments, the ray source is located on one side away from the multiple sets of scintillators relative to the tray, and a contact portion of the tray with the multiple sets of scintillators includes a sheet with a density of less than 5g/cm³.

In some embodiments, the sheet includes an aluminum plate or a plastic plate.

In some embodiments, each of the multiple sets of scintillators is arranged in a scintillator set that matches the size of the radiation area, and the driving mechanism is configured to cause each scintillator set to successively enter the radiation area along a preset movement route.

In some embodiments, the preset movement route includes a straight line, an arc, or a combination of a straight line and an arc.

In some embodiments, the image acquiring system is configured to perform an image acquiring operation after the scintillator set enters the radiation area, and the driving mechanism is configured to cause the next scintillator set to enter the radiation area if the scintillator set which is current image acquired is not the last set after the image acquiring operation.

In some embodiments, the image acquiring system includes: a planar array image sensing unit and an optical lens, wherein the planar array image sensing unit is configured to acquire, by the optical lens, scintillation illuminating images of a scintillation light excited by the rays in the multiple sets of scintillators.

In some embodiments, the image acquiring system further includes at least one mirror disposed on a propagation path of the scintillation light of the multiple sets of scintillators to reflect the scintillation light into the optical lens.

In some embodiments, the scintillator sensitivity measuring device further includes an image processing unit disposed in the image acquiring system or independent from the image acquiring system and communicatively connected to the image acquiring system, wherein the image processing unit is configured to perform grayscale statistics according to the scintillation illuminating images, and calculate an image position and sensitivity of each of the detected scintillators according to grayscale statistics results.

In some embodiments, the scintillator sensitivity measuring device further includes a control unit communicatively connected to the ray source, the driving mechanism and the image acquiring system respectively, and configured to cooperatively control the ray source, the driving mechanism and the image acquiring system.

In some embodiments, the scintillator sensitivity measuring device further includes a radiation shield, wherein the ray source, the driving mechanism and the image acquiring system are disposed inside the radiation shield.

According to another aspect of the present disclosure, provided is a measuring method based on the scintillator sensitivity measuring device, including:
S1: activating the ray source to emit rays towards a radiation area;
S2: causing one of multiple sets of scintillators to be detected to enter the radiation area by the driving mechanism;
S3: acquiring scintillation illuminating images of detected scintillators which enter the radiation area by the image acquiring system, so that the sensitivity of the detected scintillators is calculated on the basis of the scintillation illuminating images;
S4: determining whether the set of scintillators which is current image acquired is the last set, if not the last set, repeating S2, S3, and S4.

Therefore, according to the embodiments of the present disclosure, the driving mechanism causes the multiple sets of scintillators to be detected successively enter the radiation area of the ray source, the image acquiring system acquires scintillation illuminating images of detected scintillators which enter the radiation area, and the sensitivity of the detected scintillators can be calculated on the basis of the scintillation illuminating images. In this process, the plurality of scintillators can be automatically and successively measured by the driving mechanism, so that the sensitivity of the scintillators is measured more quickly and efficiently.

### BRIEF DESCRIPTION OF THE DRAWINGS

The drawings described herein are used to provide a further understanding of the present disclosure, and form part of the present application. The illustrative embodiments of the present disclosure and the description thereof are for explaining the present disclosure and do not constitute an undue definition on the present disclosure. In the drawings:
Fig. 1 is a schematic diagram of a scintillator sensitivity measuring device according to some embodiments of the present disclosure.
Fig. 2 is a schematic diagram of a scintillator sensitivity measuring device according to some other embodiments of the present disclosure.
Fig. 3 is a schematic diagram of a scintillator sensitivity measuring device according to still some other embodiments of the present disclosure.
Fig. 4 is a schematic structure diagram of a radiation source forming an radiation area in some embodiments of the scintillator sensitivity measuring device according to the present disclosure.
Fig. 5 is a schematic structure diagram of a linear movement of scintillators placed on a tray in some embodiments of the scintillator sensitivity measuring device according to the present disclosure.
Fig. 6 is a schematic optical path diagram of a tray using an optical fiber panel in some embodiment of the scintillator sensitivity measuring device according to the present disclosure.
Fig. 7 is a schematic optical path diagram of a tray using a one-side sanded glass panel in some embodiments of the scintillator sensitivity measuring device according to the present disclosure.
Fig. 8 is a schematic optical path diagram of a tray using an aluminum plate in some embodiments of the scintillator sensitivity measuring device according to the present disclosure.
Fig. 9 is a schematic optical path diagram of scintillation light imaged directly through an optical lens in a planar array image sensing unit in some embodiments of the scintillator sensitivity measuring device according to the present disclosure.
Fig. 10 is a schematic optical path diagram of scintillation light reflected by a mirror once and then imaged through an optical lens in a planar array image sensing unit in some embodiments of the scintillator sensitivity measuring device according to the present disclosure.
Fig. 11 is a schematic optical path diagram of scintillation light reflected by a mirror twice and then imaged through an optical lens in a planar array image sensing unit in some embodiments of the scintillator sensitivity measuring device according to the present disclosure.
Fig. 12 is partial scintillator illuminating images acquired by an image acquiring system as an example in some embodiments of the scintillator sensitivity measuring device according to the present disclosure.
Fig. 13 is a schematic image of the area after image processing of Fig. 12.
Fig. 14 is a schematic flowchart of a measuring method in some embodiments according to the present disclosure.

### DETAILED DESCRIPTION

The technical solutions of the present disclosure are further described in detail below through the drawings and embodiments.

The exemplary embodiments of the present disclosure will now be described in detail with reference to the drawings. The description of the exemplary embodiments is merely illustrative, and is in no way intended to limit the present disclosure and its application or use. The present disclosure can be implemented in many different forms, and not limited to the embodiments described herein. These embodiments are provided in order to make the present disclosure transparent and complete and to fully express the scope of the present disclosure to those skilled in the art. It should be noted that unless otherwise specified, the relative arrangement of components and steps, components of materials, numerical expressions and values described in the embodiments should be construed as merely illustrative rather than restrictive.

The words "first", "second" and the like used in the present disclosure do not mean any order, quantity or importance, but are used to distinguish different parts. The words "including" or "including" and the like mean that an element preceding the words covers an element listed after the words and does not exclude the possibility of covering other elements. The words "upper", "lower", "left", "right" and the like are only used to indicate the relative positional relationship, and when the absolute position of the object to be described is changed, the relative positional relationship may also be changed accordingly.

In the present disclosure, when it is described that a particular device is located between a first device and a second device, there may be an intervening device between the particular device and the first device or the second device, or there may be no intervening device therebetween. When it is described that a particular device is connected to another device, the particular device may be directly connected to the another device without an intervening device, or the particular device may not be directly connected to the another device but an intervening device is present.

All terms (including technical or scientific terms) used in the present disclosure have the same meaning as understood by one of ordinary skill in the art to which the present disclosure pertains, unless specifically defined otherwise. It should also be understood that terms defined in, for example, a general dictionary should be construed as having meanings consistent with their meanings in the context of the related art, and are not to be construed with idealized or extremely formalized meanings, unless explicitly defined herein.

Techniques, methods and apparatuses known to one of ordinary skill in the relevant art may not be discussed in detail, but where appropriate, the techniques, methods and apparatuses should be considered as part of the description.

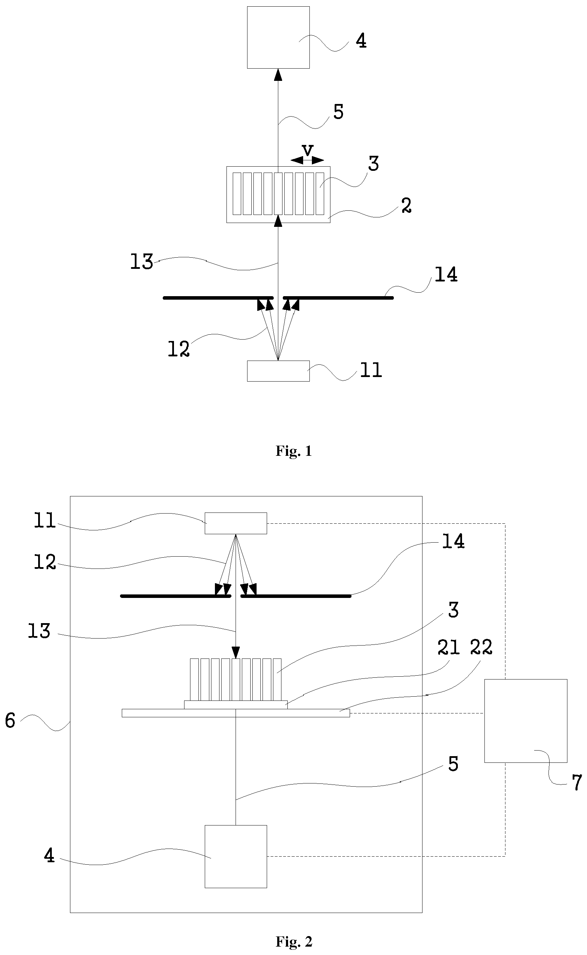

Fig. 1 is a schematic diagram of a scintillator sensitivity measuring device according to some embodiments of the present disclosure. The scintillator sensitivity measuring device includes:
a ray source 11 for emitting rays 13 towards a radiation area 15;
a driving mechanism 2 for causing multiple sets of scintillators 3 to be detected to successively enter the radiation area 15; and
an image acquiring system 4 for acquiring scintillation illuminating images of the detected scintillators 3 which enter the radiation area 15, so that the sensitivity of the detected scintillators 3 is calculated on the basis of the scintillation illuminating images.

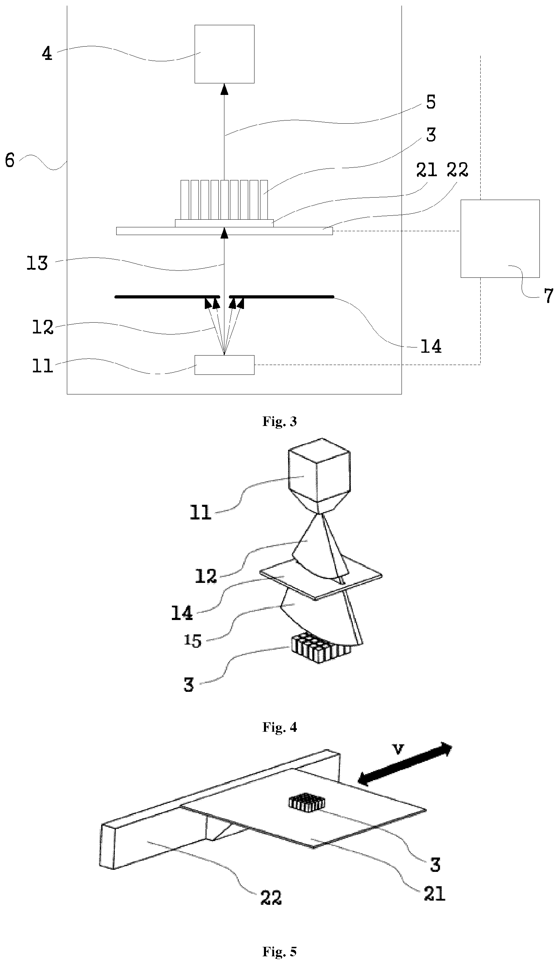

The ray source 11 may include an X-ray source generated by bremsstrahlung or a γ source of a radioisotope, and is capable of generating rays 12 upon opening. The ray source 11 can be turned on or off and parameters such as radiation dose can be adjusted under the control of an associated control program. In order to enable the rays 12 generated by the ray source 11 to be limited within a certain area, referring to Fig. 4, in some embodiments, a beam limiter 14 may be disposed on one side of the ray source 11. The beam limiter 14 may be made of a heavy metal plate material such as lead or tungsten, and an opening is provided thereon. When the rays 12 generated by the ray source 11 are emitted onto the beam limiter 14, only a portion of the rays 13 passes through the opening, and the radiation area formed by the portion of the rays 13 passing through is referred to as the radiation area 15. The shape and size of the radiation area 15 are defined by the opening in the beam limiter 14, for example, the opening in Fig. 4 is configured in the form of a linear slit to obtain the radiation area 15 in the shape of a sector. According to actual needs, the design width of the radiation area 15 can satisfy the radiation of the single or multiple rows of scintillators 3.

After the radiation area 15 is formed, the driving mechanism 2 can enable the multiple sets of scintillators 3 to be detected to successively enter the radiation area 15 so that the image acquiring system 4 performs image acquisition in batches for the multiple sets of scintillators 3. Each of the multiple sets of scintillators 3 may include one or more scintillators 3. The plurality of scintillators 3 may be arranged in a row along a line perpendicular to the moving direction, or may be arranged in two or more rows. In order to enable the scintillators 3 to successively enter the radiation area 15, the driving mechanism 2 can be operatively connected to the ray source 11 so as to drive the ray source 11 to move relative to the multiple sets of scintillators 3. This process is equivalent to changing the physical position of the radiation area 15 so that the radiation area 15 successively scans across the multiple sets of scintillators 3. In order to always acquire an scintillation illuminating image, the image acquiring system 4 can be fixed or move synchronously or asynchronously as the ray source 11 moves according to needs.

Referring to Fig. 1, in some other embodiments, the driving mechanism 2 can be operatively connected to the multiple sets of scintillators 3 and drive the multiple sets of scintillators 3 to move relative to the ray source 11. In this way, the relative stationary of the ray source 11 and the image acquiring system 4 can be maintained, and the requirement of the scintillators 3 entering the radiation area 15 in batches can be implemented by driving the multiple sets of scintillators 3 to move.

In order to drive movement of the multiple sets of scintillators 3 by the driving mechanism 2, in some embodiments, the multiple sets of scintillators may be integrated by shell extrusion, bonding, bundling, etc., and then, various driving elements such as a manipulator, a cylinder, and a pulley are used for movement driving. In some other embodiments, a scintillator holder can be used to carry the load of the multiple sets of scintillators 3, that is, a scintillator holder is added to the scintillator sensitivity measuring device, and the multiple sets of scintillators 3 are arranged on the scintillator holder. The driving mechanism 2 can drive the scintillator holder to move so as to implement movement of the multiple sets of scintillators 3 relative to the ray source 11.

Referring to Fig. 5, the scintillator holder may include a tray 21 that may be connected by a transmission device 22 in the driving mechanism 2 and move under the drive of the transmission device 22. The transmission device 22 may include a belt transmission device, a gear-rack transmission device or a ball screw transmission device, etc. If the moving speed of the tray 21 is relatively slow, the multiple sets of scintillators 3 can be directly placed on the surface of the tray 21, which is relatively easy to arrange and remove the scintillators 3. In some other embodiments, pits matching the scintillators 3 may be provided on the surface of the tray 21 to prevent the scintillators 3 from tipping during the movement. In order to make movement of the scintillators 3 more stable and reliable, in some other embodiments, the scintillators 3 can also be fixed to the surface of the tray 21 by bonding or snapping, etc., which can allow a faster moving speed.

In Figs. 1 and 5, the movement plane of the tray 21 can be selected as a horizontal plane, that is, the tray 21 can be driven by the driving mechanism 2 to move in a horizontal direction. For the arrangement in which the scintillators 3 are placed on the tray 21, keeping the tray 21 moving horizontally can make movement of the scintillators 3 more stable, thus not easily causing the problem of overturning. If the scintillators 3 are fixed on the surface of the tray 21, the tray 21 can also be driven by the driving mechanism 2 to move in an inclined or even vertical direction relative to the horizontal plane.

In Fig. 1, the rays 13 emitted into the scintillators 3 are capable of exciting scintillation light 5 in the scintillators 3, and the image acquiring system 4 can receive the scintillation light 5 to obtain scintillation illuminating images of detected scintillators 3 which enter the radiation area 15. The scintillation illuminating images can be used to calculate the sensitivity of the detected scintillators 3. In some embodiments, the scintillator sensitivity measuring device further includes an image processing unit that calculates an image position and sensitivity of each of the detected scintillators 3 according to grayscale statistics results. The image processing unit can be provided as a physical component or processing program in the image acquiring system 4, i.e., as part of the image acquiring system. In some other embodiments, the image processing unit may also be independent from the image acquiring system 4 and communicatively connected to the image acquiring system 4. After the image acquiring system 4 has acquired the scintillation illuminating images, the image processing unit can determine the location and sensitivity of the scintillators 3 by calculating a significant grayscale change in the images.

Fig. 2 is a schematic diagram of a scintillator sensitivity measuring device according to some other embodiments of the present disclosure. Compared with the foregoing embodiments, the ray source 11 of the present embodiments is located on one side of the tray 21 adjacent to the multiple sets of scintillators 3, and the image acquiring system 4 can be located on the side away from the multiple sets of scintillators 3. In Fig. 2, the tray 21 can be parallel to the horizontal plane and driven by the driving mechanism 2 to move in the horizontal direction. The ray source 11 is located on the upper side of the multiple sets of scintillators 3, while the image acquiring system 4 may be located on the lower side of the tray 21. The rays 13 in the radiation area 15 may be substantially perpendicular to the tray 21.

In the embodiments shown in Fig. 2, the scintillator sensitivity measuring device may further include a radiation shield 6, wherein the ray source 11, the driving mechanism 2 and the image acquiring system 4 may be disposed inside the radiation shield 6. The inner wall of the radiation shield 6 may be black in color, and the radiation shield 6 may be formed of a heavy metal plate (such as stainless steel, lead or tungsten, etc.) or a cement wall. The radiation shield 6 is capable of shielding an external light source, absorbing internal stray light, and shielding internal ionizing radiation to protect operators.

Referring to Fig. 2, in some other embodiments, the scintillator sensitivity measuring device may further include a control unit 7. The control unit 7 is communicatively connected to the ray source 11, the driving mechanism 2 and the image acquiring system 4 respectively, and configured to cooperatively control the ray source 11, the driving mechanism 2 and the image acquiring system 4, thereby realizing automatic measurement and reducing manual operations. For example, the control unit 7 implements mutual communication between the ray source 11, the driving mechanism 2 and the image acquiring system 4, thereby ensuring that the image acquiring operation matches movement of the scintillators 3. Specifically, the control unit 7 can control the trigger of the acquiring operation of the image acquiring system 4, adjust parameters such as integration time or gain, control the startup time of the driving mechanism 2, and adjust the parameters such as displacement amount or displacement speed of the movement. The control unit 7 can also implement the function of the image processing unit, obtain position information and the grayscale statistics data of the detected scintillators 3 by processing the scintillation illuminating images of detected scintillators 3, and further calculate the sensitivity of the detected scintillators 3.

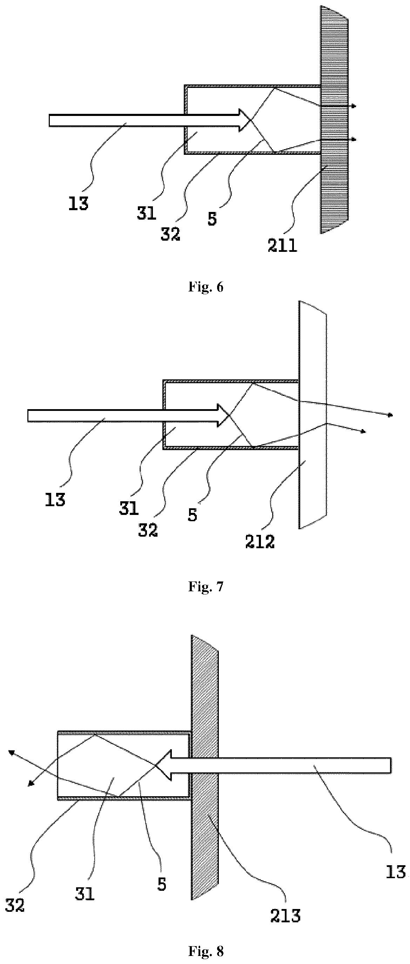

In the arrangement shown in Fig. 2, referring to Figs. 6 and 7, in some embodiments, a contact portion of the tray 21 with the multiple sets of scintillators 3 may include an optically transparent sheet. Of course, in addition to the use of the optically transparent sheet at the contact portion, it is equally feasible to use the optically transparent sheet for the whole tray 21. Since the sheet has certain hardness, it is not prone to deformation, so that a measurement error caused by the deformation of the tray 21 can be avoided. Using the optically transparent sheet may cause scintillation light 5, which is excited by the rays 13 entering the interior 31 of the scintillators 3, to be emitted outwardly through the tray 21 with less loss. A reflective layer 32 is provided on the outer surface of the scintillators 3.

In Fig. 6, the hard sheet includes a fiber optic panel 211, and the panel can emit scintillation light, which is emitted to a surface, along the direction of fiber extension. The sheet shown in Fig. 7 includes a one-side frosted glass panel 212, and the glass panel 212 has a frosted surface on the side close to the multiple sets of scintillators 3 and a smooth surface on the other side. Such a panel is capable of utilizing the diffuse reflection of reflected light from the frosted surface to the smooth surface to avoid "ghosting" phenomenon during the acquisition of the scintillation illuminating images. The "ghosting" phenomenon refers to the imaging effect of light and reflected light in a sheet together in the image acquiring system, which will affect the location determination of the scintillators 3 and the calculation of sensitivity.

In addition to the use of a one-side frosted glass panel 212, in another embodiment, a one-side frosted quartz panel may also be used, correspondingly having a frosted surface on the side close to the multiple sets of scintillators 3 and a smooth surface on the other side.

Fig. 3 is a schematic diagram of a scintillator sensitivity measuring device according to still some other embodiments of the present disclosure. Compared with the embodiments shown in Fig. 2, the ray source 11 of the present embodiments is located on one side away from the multiple sets of scintillators 3 relative to the tray 21, and the image acquiring system 4 can be located on the side close to the multiple sets of scintillators 3. In Fig. 3, the tray 21 can be parallel to the horizontal plane and driven by the driving mechanism 2 to move in the horizontal direction. The ray source 11 is located on the lower side of the multiple sets of scintillators 3, while the image acquiring system 4 may be located on the upper side of the tray 21. The rays 13 in the radiation area 15 may be substantially perpendicular to the tray 21.

For the related contents of the radiation shield 6 and the control unit 7 in Fig. 3, reference may be made to those embodiments shown in Fig. 2, and details are not repeated herein. In the arrangement shown in Fig. 3, referring to Fig. 8, in some embodiments, a contact portion of the tray 21 with the multiple sets of scintillators 3 includes a sheet with a small density (for example, a density of less than 5g/cm3). Of course, in addition to the use of the sheet with a small density at the contact portion, it is equally feasible to use the sheet with a small density for the whole tray 21. Since the sheet has certain hardness, it is not prone to deformation, so that a measurement error caused by the deformation of the tray 21 can be avoided.

Since the rays 13 first pass through the tray 21 and then enter the scintillators 3, the loss of the rays 13 can be minimized by using a sheet with a small density. The sheet may include an aluminum plate 213 shown in Fig. 8, and a hard sheet of other materials such as a plastic plate may also be used. In addition, the multiple sets of scintillators are integrated by shell extrusion, bonding, bundling, etc. as mentioned in the foregoing embodiments, and then grasped by a mechanism such as a manipulator and driven to move, thereby reducing the loss of the rays 13 or the scintillation light 5 by omitting the tray. Alternatively, a plurality of through holes for accommodating the scintillators 3 are formed in the tray 21, so that neither the rays 13 nor the scintillation light 5 needs to pass through the tray 21, thereby reducing the loss of the rays 13 or the scintillation light 5 when passing through the tray 21.

It is mentioned in the previous embodiments that the multiple sets of scintillators 3 can enter the radiation area 15 in batches. In order to facilitate image acquisition, each of the multiple sets of scintillators 3 can be arranged into a scintillator set that matches the size of the radiation area 15. In this way, the image acquiring system can acquire at one time scintillation illuminating images of at least one set including the plurality of scintillators 3, thereby improving the measurement efficiency. The scintillator set may be in the form of an a×b array as shown in Fig. 5, or may be arranged in other shapes, such as a diamond shape, a trapezoidal shape, or a circular shape.

The driving mechanism 2 may enable scintillator sets to successively enter the radiation area 15 along a preset movement route. Here the preset movement route may be a straight line route as shown in Fig. 5. In some embodiments, an arc-shaped arc route may also be used. Accordingly, the driving mechanism 2 needs to drive the scintillators 3 to swing a preset angle around a preset center. In some other embodiments, the preset movement route may also be a combination of a straight line and an arc.

In order to enable the image acquiring system 4 to cooperate with movement of scintillator sets, the image acquiring system 4 can be configured to perform an image acquiring operation after a scintillator set enters the radiation area 15. The driving mechanism 2 is configured to cause the next scintillator set to enter the radiation area 15 if the scintillator set which is current image acquired is not the last set after the image acquiring operation. If the last scintillator set has been acquired, the measurement process can be ended, or a reverse re-acquisition can be selected according to the actual situation.

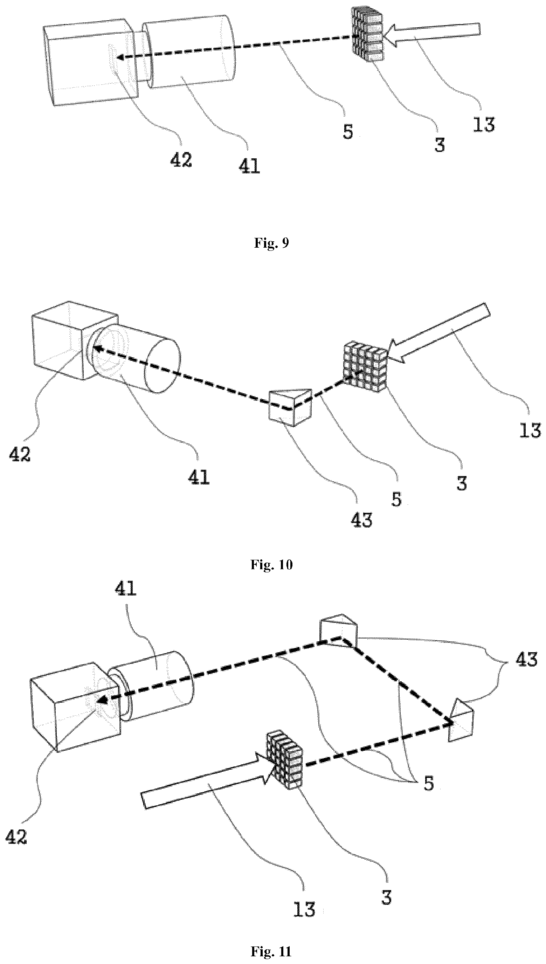

Referring to Figs. 9-11, the image acquiring system 4 may include: a planar array image sensing unit 42 and an optical lens 41, wherein the planar array image sensing unit 42 acquires, by the optical lens 41, scintillation illuminating images of scintillation light 5 excited by the rays 13 in the multiple sets of scintillators 3. The planar array image sensing unit 42 may include a planar array charge-coupled device (CCD) panel or a planar array complementary metal oxide semiconductor (CMOS) panel.

In Fig. 9, the scintillation light 5, which is excited by the rays 13 of the radiation area 15 after entering the scintillators 3, can be directly imaged by the optical lens 41 into the planar array image sensing unit 42. This requires that the optical lens 41, the planar array image sensing unit 42, the scintillators 3, the ray source 11, and the like are disposed on approximately a straight line. In order to avoid the direct radiation damage to the planar array image sensing unit 42, the image acquiring system 4 may further include at least one mirror 43 that is disposed on a propagation path of scintillation light of the multiple sets of scintillators 3 to reflect the scintillation light 5 into the optical lens 41. For example, the arrangement of reflecting through one mirror 43 and two mirrors 43 respectively shown in Figs. 10 and 11 can not only avoid the direct radiation damage to the planar array image sensing unit 42, but also facilitate the structure design of the scintillator sensitivity measuring device, and occupy less space.

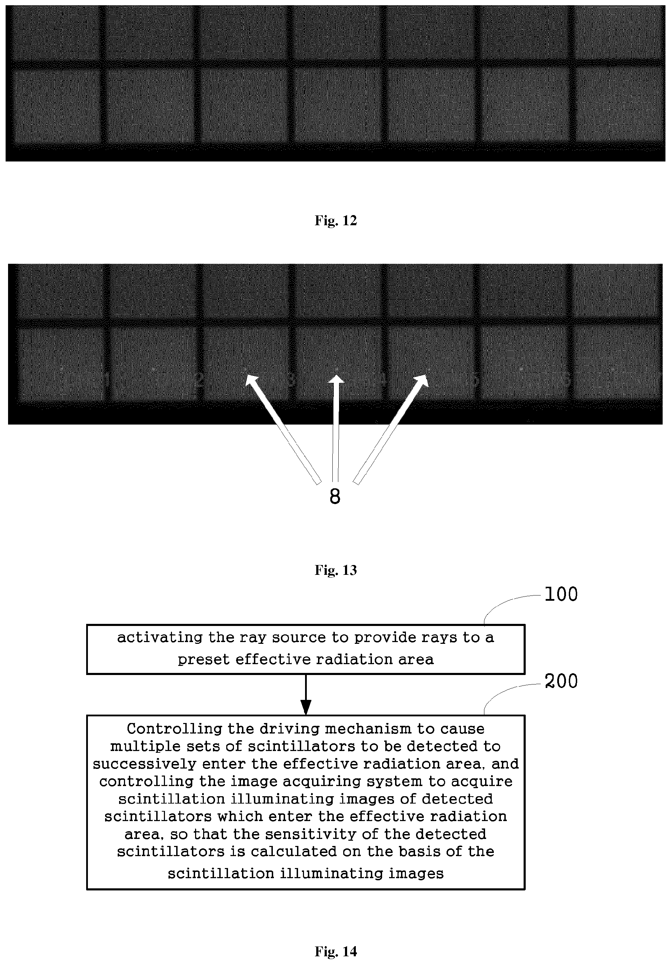

When the ray source 11 is not turned on, partial scintillator illuminating images obtained by the image acquiring system 4 as an example is shown in Fig. 12. Fig. 13 is the area (the portion inside the rectangular frame) identified after image processing of Fig. 12. In Fig. 13, tiny spots 8 indicated by arrows can assist image identification. When a spot 8 appears, it indicates that the pixel has been successfully identified. The character (e.g. "CH01") below the spot 8 in each successfully identified pixel is a pixel number.

In the specific calculation, a corresponding grayscale image may be obtained after the image acquisition is completed, and the image position of the corresponding pixel of each scintillator is distinguished by an existing pattern identification algorithm or a manual discrimination algorithm. Then, feature values of corresponding pixels of the scintillators in the imaging area are obtained, and the feature values include an average value, an intermediate value, a maximum value or a minimum value, and the like. For example, the average value is used as the sensitivity of the scintillators, and the feature values such as the intermediate value, the maximum value, and the minimum value are used as a reference to try to avoid errors in the measurement. According to needs, correction can be made by the algorithm such as the scintillator position correction (the difference between the measured values of the scintillation unit may vary depending on the location) and the background value subtraction (i.e., deducting the grayscale of the substrate when the ray source is not turned on), and finally the sensitivity of the scintillators is obtained.

Based on the embodiments of the scintillator sensitivity measuring device in the present disclosure, the present disclosure further provides a corresponding measuring method. Refer to Fig. 14, the method includes:
Step 100, activating the ray source 11 to emit rays 13 towards a preset radiation area 15;
Step 200, controlling the driving mechanism 2 to cause multiple sets of scintillators 3 to be detected to successively enter the radiation area 15, and controlling the image acquiring system 4 to acquire scintillation illuminating images of detected scintillators 3 which enter the radiation area 15, so that the sensitivity of the detected scintillators 3 is calculated on the basis of the scintillation illuminating images. The control body in step 100 and step 200 may be a same control unit, or may be controlled by different control elements. For step 200, the driving mechanism 2 and the image acquiring system 4 may be cooperatively controlled by a same control unit, or may be controlled by different control units respectively, and communication between the respective control units is required in order to achieve the cooperation of actions.

In some embodiments, the step 200 can include:
Step 210: causing one of multiple sets of scintillators 3 to be detected to enter the radiation area 15 by the driving mechanism 2;
Step 220: acquiring scintillation illuminating images of detected scintillators 3 which enter the radiation area 15 by the image acquiring system 4, so that the sensitivity of the detected scintillators 3 is calculated on the basis of the scintillation illuminating images;
Step 230: determining whether the set of scintillators 3 which is current image acquired is the last set, if not the last set, repeating S210, S220, and S230.

In one embodiment, further including arranging a plurality of scintillators 3 in at least one scintillator set that matches the size of the radiation area 15. The image acquiring system 4 is controlled to perform an image acquiring operation after the scintillator set enters the radiation area 15, and it is determined whether the scintillator set which is current image acquired is the last set after the image acquiring operation. If it is not the last set, the driving mechanism 2 is controlled to cause the next scintillator set to enter the radiation area 15.

Multiple embodiments in the description are described in a progressive manner, and the emphasis of the embodiments is different, and the same or similar parts between the embodiments may be referred to each other. For method embodiments, the description is relatively simple because the whole and the steps involved correspond to the contents of the system embodiments, and the relevant contents can be referred to part of the description of the device embodiments.

An example of a scintillator measuring process is briefly described below with reference to the embodiments shown in Fig. 2. In this example, the multiple sets of scintillators 3 to be measured are first placed on the surface of the tray 21, and the focus surface of the optical lens in the image acquiring system 4 is adjusted to obtain a clear image of the scintillator window. The radiation shield 6 is placed outside the ray source 11, the scintillators 3, the driving mechanism 2, the image acquiring system 4, and the like, and then the automation process of the control unit 7 is activated to finally obtain the sensitivity data of the measured scintillators 3. Then, the radiation shield 6 is opened, and the measured scintillators 3 are retrieved. If there are further measured scintillators, the above process is repeated.

In this process, the automation process of the control unit 7 may include: moving the tray 21 to the initial position through the driving mechanism 2, and then activating the ray source 11 to cause the energy and dose to reach a set target value. The tray 21 is moved along a preset route to cause a scintillator set to move into the radiation area 15, and then the image acquiring system 4 acquires scintillation illuminating images of the scintillator set. The image processing unit provided in the control unit 7 may perform image processing on acquired images to calculate the sensitivity of the detected scintillators 3, which may be performed immediately after an image is acquired, or may be performed after scintillation images of all the scintillators 3 are acquired.

After image acquisition, the control unit 7 may control the driving mechanism 2 to move the tray 21 along the preset route, so that the next scintillators set 3 can move to the radiation area 15, and repeat the above image acquisition and tray movement until all the detected scintillators 3 are measured. The ray source 11 is then turned off and the tray 21 is then returned to the initial position.

Heretofore, the embodiments of the present disclosure have been described in detail. In order to avoid obscuring the concepts of the present disclosure, some details known in the art are not described. Those skilled in the art can fully understand how to implement the technical solutions disclosed herein according to the above description.

Although some specific embodiments of the present disclosure have been described in detail through examples, it should be understood by those skilled in the art that the above examples are for illustrative purpose only and are not intended to limit the scope of the present disclosure. It should be understood by those skilled in the art that the above embodiments may be amended or some of the technical features may be equivalently replaced without departing from the scope and spirit of the present disclosure. The scope of the present disclosure is defined by the appended claims.

## Claims

1. A scintillator sensitivity measuring device, comprising:
a ray source (11) for emitting rays (13) towards a radiation area (15);
a driving mechanism (2) for causing multiple sets of scintillators (3) to be detected to successively enter the radiation area (15), and
an image acquiring system (4) for acquiring scintillation illuminating images of the detected scintillators (3) which enter the radiation area (15), so that the sensitivity of the detected scintillators (3) is calculated on the basis of the scintillation illuminating images.

2. The scintillator sensitivity measuring device according to claim 1, wherein the driving mechanism (2) is operatively connected to the multiple sets of scintillators (3) so as to drive the multiple sets of scintillators (3) to move relative to the ray source (11) .

3. The scintillator sensitivity measuring device according to claim 2, further comprising a scintillator holder, wherein the multiple sets of scintillators (3) are disposed on the scintillator holder, and the driving mechanism (2) is configured to drive the scintillator holder to move so as to implement movement of the multiple sets of scintillators (3) relative to the ray source (11) .

4. The scintillator sensitivity measuring device according to claim 3, wherein the scintillator holder comprises a tray (21), and the multiple sets of scintillators (3) are arranged on a surface of the tray (21).

5. The scintillator sensitivity measuring device according to claim 4, wherein the tray (21) is movable in a horizontal direction under the driving of the driving mechanism (2).

6. The scintillator sensitivity measuring device according to claim 4, wherein the ray source (11) is located on one side of the tray (21) adjacent to the multiple sets of scintillators (3), and a contact portion of the tray (21) with the multiple sets of scintillators (3) comprises an optical transparent sheet.

7. The scintillator sensitivity measuring device according to claim 6, wherein the sheet comprises an optical fiber panel (211), a glass panel (212) or quartz panel with a frosted surface on the side close to the multiple sets of scintillators (3) and a smooth surface on the other side.

8. The scintillator sensitivity measuring device according to claim 4, wherein the ray source (11) is located on one side away from the multiple sets of scintillators (3) relative to the tray (21), and a contact portion of the tray (21) with the multiple sets of scintillators (3) comprises a sheet with a density of less than 5g/cm³.

9. The scintillator sensitivity measuring device according to claim 1, wherein each of the multiple sets of scintillators (3) is arranged in a scintillator set that matches the size of the radiation area (15), and the driving mechanism (2) is configured to cause each scintillator set to successively enter the radiation area (15) along a preset movement route.

10. The scintillator sensitivity measuring device according to claim 9, wherein the image acquiring system (4) is configured to perform an image acquiring operation after the scintillator set enters the radiation area (15), and the driving mechanism (2) is configured to cause the next scintillator set to enter the radiation area (15) if the scintillator set which is current image acquired is not the last set after the image acquiring operation.

11. The scintillator sensitivity measuring device according to claim 1, wherein the image acquiring system (4) comprises: a planar array image sensing unit (42) and an optical lens (41), and the planar array image sensing unit (42) is configured to acquire, by the optical lens (41), scintillation illuminating images of a scintillation light (5) excited by the rays (13) in the multiple sets of scintillators (3).

12. The scintillator sensitivity measuring device according to claim 11, wherein the image acquiring system (4) further comprises at least one mirror (43) disposed on a propagation path of the scintillation light of the multiple sets of scintillators (3) to reflect the scintillation light (5) into the optical lens (41).

13. The scintillator sensitivity measuring device according to claim 1, further comprising an image processing unit disposed in the image acquiring system (4) or independent from the image acquiring system (4) and communicatively connected to the image acquiring system (4), wherein the image processing unit is configured to perform grayscale statistics according to the scintillation illuminating images, and calculate an image position and sensitivity of each of the detected scintillators (3) according to grayscale statistics results.

14. The scintillator sensitivity measuring device according to claim 1, further comprising a radiation shield (6), wherein the ray source (11), the driving mechanism (2) and the image acquiring system (4) are disposed inside the radiation shield (6).

15. A measuring method based on the scintillator sensitivity measuring device according to any of claims 1-14, comprising:
S1: activating the ray source (11) to emit rays (13) towards a radiation area (15); and
S2: causing one of multiple sets of scintillators (3) to be detected to enter the radiation area (15) by the driving mechanism (2) ;
S3: acquiring scintillation illuminating images of detected scintillators (3) which enter the radiation area (15) by the image acquiring system (4), so that the sensitivity of the detected scintillators (3) is calculated on the basis of the scintillation illuminating images;
S4: determining whether the set of scintillators (3) which is current image acquired is the last set, if not the last set, repeating S2, S3, and S4.
